# EUROPEAN PATENT APPLICATION

(11) **EP 3 094 047 A1**
(43) Date of publication of application: **16.11.2016**
(21) Application number: 14878325.1
(22) Date of filing: 24.06.2014
(51) Int. Cl.: H04L 12/24, H04W 24/04

(54) **METHOD AND DEVICE FOR AUTOMATICALLY COMMISSIONING AISG REMOTE ELECTRICAL TILT ANTENNAS IN BATCHES**

(30) Priority: 07.01.2014 CN 201410007140
(71) Applicant: ZTE Corporation, Shenzhen, Guangdong 518057 (CN)
(72) Inventor: FENG, Jiaojiao, Shenzhen Guangdong 518057 (CN); ZHANG, Peng, Shenzhen Guangdong 518057 (CN); LI, Qiong, Shenzhen Guangdong 518057 (CN)
(74) Representative: Deambrogi, Edgardo
(86) International application number: PCT/CN2014/080639
(87) International publication number: WO 2015/103854

(57) **Abstract**

Provided are a method and device for automatically performing commissioning test on Antenna Interface Standards Group (AISG) electrical tilt antennae in batches, and relates to the field of wireless communication network management. The method includes that: a scanning request is sent to multiple AISG devices respectively connected with different Remote Radio Units (RRUs); scanning results obtained by the multiple AISG devices according to the scanning request are received from the multiple AISG devices, wherein each scanning result includes device information; an antenna adjustment file adapted to the device information of the AISG device is created for each AISG device according to the scanning result of the AISG device; and the antenna adjustment files created for respective AISG devices are sequentially issued to the corresponding AISG devices to enable the AISG devices to sequentially adjust antennae according to the antenna adjustment files.

## Description

### Technical Field

The present disclosure relates to the field of wireless communication network management, and in particular to a method and device, designed on the basis of a Local Maintenance Terminal (LMT) network management system, for automatically performing commissioning test on parameters of AISG antenna feeder subsystem in batches through one key operation.

### Background

An LMT is light network manager development software in a large-scale wireless communication network management system, and is an essential tool for development personnel who conducts on-station commissioning test and operation and maintenance personnel of a control center because of its flexibility in deployment and convenience in positioning.

AISG antenna feeder commissioning test has a high requirement on services in a network management system. There are numerous antenna manufacturers and huge varieties of devices, network management personnel are not so familiar with antenna services and an antenna manufacturer user is also unfamiliar with network management services, so that high coupling between parameter commissioning test of an antenna feeder and operation configuration flow of a Graphical User Interface (GUI) of a network manager becomes a bottleneck in a commissioning test process of antenna feeder indexes.

AISG antenna device management performed by a conventional network management system is intended to perform commissioning test on a certain set of devices of a manufacturer. Firstly, a master control clock single board and a Fiber Switched (FS) single board should be ensured to operate normally in a hardware system of a base station, a topological relationship between the FS single board and Radio Remote Units (RRUs) is configured, the RRU or a built-in radio frequency unit, i.e., Remote Subscriber Unit (RSU) of a main frame are normally started for running and a control line and radio frequency connection of an AISG device are configured properly. Then, in terms of software configuration, a user is required to ensure in advance that a master control radio frequency single board object, a physical antenna required to be associated with the AISG device to be configured, a configuration relationship between the physical antenna and the radio frequency connection and the like are configured.

After hardware and software preparations are made, the user needs to manually start the network management system and send an AISG device request to the base station system. After a scanning result is reported, the user needs to modify or create the corresponding AISG device according to the scanning result and a service rule of the AISG device. After the operation is issued to the base station, the network management system synchronizes a configuration of the AISG device into the system. If the user needs to perform commissioning test on the AISG device, the user has to select a corresponding AISG device record and start the commissioning test on the AISG device through a manual operation menu. After the commissioning test is finished, the user has to manually clear a scanning view, delete the AISG device and reissue the above operation to the base station.

In a commissioning test process, scanning of a device, validation of the device, automatic calibration of an antenna and inclination angle setting and query of the antenna all require a long time. Commissioning test of parameters of an antenna device is greatly flexible and requires operating personnel to be familiar with antenna services and design principles of a Management Object Manager (MOM) of a network manager, and once the commissioning test fails, the corresponding timeout duration is accumulated to the entire duration. Therefore, the commissioning test service for a single AISG antenna is very tedious and time-consuming. For a network management system, e.g., the LMT, the commissioning test of different antenna indexes on devices from different manufacturers in batches consumes great manpower and cannot be independently implemented by operating personnel of the network manager, which makes it difficult for antenna manufacturers and operation and maintenance personnel to perform commissioning test on AISG antenna indexes through the network management system, e.g., LMT.

In the LMT, an operating sequence of issuing of antenna feeder commissioning test messages, such as configuration of connection and hardware associated with an AISG device, issuing and reporting of a scanning message, issuing of a configuration of the AISG device, automatic calibration of an AISG antenna, setting of an inclination angle, query of the inclination angle and the like, and deletion of the AISG device is required to be manually ensured by an operating personnel of a network manager. For multiple involved GUI entries in a network manager, network manager side scanning nodes and AISG device nodes actually required to be issued by a network element side, due to the differences in protocol types, device types and subunit numbers, encapsulation from the scanning nodes to the device nodes of the network element side is very complex and high familiarity with a service MOM design of the network manager is required. The requirements for antenna development, operation and maintenance personnel are too high. It is difficult for antenna development personnel of each manufacturer to perform commissioning test on antenna parameters of his/her own manufacturer, particularly for the commissioning test in batches, because each configuration flow needs to be manually triggered, the commissioning test of antenna is very time-consuming and the antenna development personnel cannot focus on antenna indexes but are entrapped in the configuration flows of network management systems.

### Summary

In order to solve the existing technical problem, the embodiments of the present disclosure mainly provide a method and device for automatically performing commissioning test on AISG electrical tilt antennae in batches.

According to one aspect of the embodiments of the present disclosure, a method for automatically performing commissioning test on AISG electrical tilt antennae in batches is provided, which may include that:
a scanning request is sent to multiple AISG devices respectively connected with different RRUs;
scanning results obtained by the multiple AISG devices according to the scanning request are received from the multiple AISG devices, wherein each scanning result includes device information;
an antenna adjustment file adapted to the device information of the AISG device is created for each AISG device according to the scanning result of the AISG device; and
the antenna adjustment files created for respective AISG devices are sequentially issued to the corresponding AISG devices to enable the AISG devices to sequentially adjust antennae according to the antenna adjustment files.

According to another aspect of the embodiments of the present disclosure, a device for automatically performing commissioning test on AISG electrical tilt antennae in batches is provided, which may include:
a scanning component, configured to send a scanning request to multiple AISG devices respectively connected with different RRUs;
a receiving component, configured to receive, from the multiple AISG devices, scanning results obtained by the multiple AISG devices according to the scanning request, wherein each scanning result includes device information;
a creation component, configured to create, for each AISG device, an antenna adjustment file adapted to the device information of the AISG device according to the scanning result of the AISG device; and
an adjustment component, configured to sequentially issue the antenna adjustment files created for respective AISG devices to the corresponding AISG devices to enable the AISG devices to sequentially adjust antennae according to the antenna adjustment files.

Compared with the related art, the embodiments of the present disclosure have beneficial effects as follows: by a method for performing commissioning test on AISG antenna feeder indexes, which can decouple network manager GUI and antenna feeder service on the basis of the AISG device management of a network management system, e.g., LMT, through one key operation, an operating personnel of a network manager may be prevented from being entrapped in a configuration service flow of a network manager, the requirements on network manager operation may be lowered, and commissioning test time may be saved.

### Brief Description of the Drawings

Fig. 1 is a schematic diagram of a method for automatically performing commissioning test on AISG electrical tilt antennae in batches according to an embodiment of the present disclosure;
Fig. 2 is a structure diagram of a device for automatically performing commissioning test on AISG electrical tilt antennae in batches according to an embodiment of the present disclosure;
Fig. 3 is a diagram of a two-Transmit two-Receive (2T2R) typical connection configuration of R8882 and R8863 for automatically adjusting AISG electrical tilt antennae in batches according to an embodiment of the present disclosure;
Fig. 4 is a diagram of basic indexes of various types of antennae to be tested during automatic batch commissioning test of AISG electrical tilt antennae according to an embodiment of the present disclosure;
Fig. 5 is a topological diagram of a preset connection configuration manner for batch antenna commissioning test during automatic batch commissioning test of AISG electrical tilt antennae according to an embodiment of the present disclosure;
Fig. 6 is a flowchart of a preset condition of a one-key tool for automatically performing commissioning test on AISG electrical tilt antennae in batches according to an embodiment of the present disclosure;
Fig. 7 is a flowchart of basic key steps of automatic commissioning test of antenna feeder parameters during automatic batch commissioning test of AISG electrical tilt antennae according to an embodiment of the present disclosure;
Fig. 8 is a data flowchart of scanning and testing parameters of a single device with a basic configuration during automatic batch commissioning test of AISG electrical tilt antennae according to an embodiment of the present disclosure;
Fig. 9 is a diagram of a practical connection configuration manner of a manufacturer automatically performing commissioning test on AISG electrical tilt antennae in batches according to an embodiment of the present disclosure;
Fig. 10 is an automatic commissioning test flowchart of automatically performing commissioning test on AISG electrical tilt antennae in batches according to an embodiment of the present disclosure;
Fig. 11 is a topological diagram after automatically encapsulated AISG device objects are issued during automatic batch commissioning test of AISG electrical tilt antennae according to an embodiment of the present disclosure; and
Fig. 12 is a diagram of recording operation flow details and results into an automatic commissioning test report during automatic batch commissioning test of AISG electrical tilt antennae according to an embodiment of the present disclosure.

### Detailed Description of the Embodiments

Exemplary embodiments of the present disclosure will be described below with reference to the drawings in detail, and it should be understood that the exemplary embodiments described below are only adopted to describe and explain the present disclosure and not intended to limit the present disclosure.

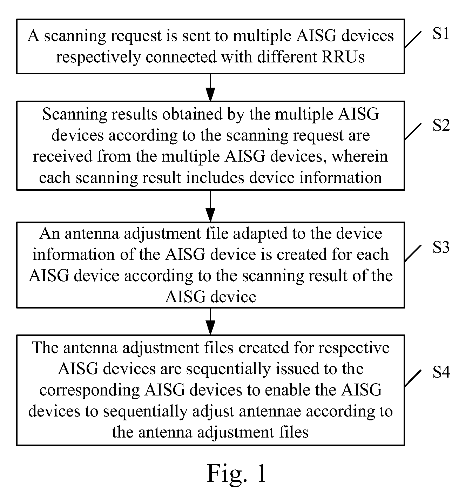

Fig. 1 is a schematic diagram of a method for automatically performing commissioning test on AISG electrical tilt antennae in batches according to an embodiment of the present disclosure. As shown in Fig. 1, the method includes the following steps.

Step S1: a scanning request is sent to multiple AISG devices respectively connected with different RRUs.

Step S2: scanning results obtained by the multiple AISG devices according to the scanning request are received from the multiple AISG devices, wherein each scanning result includes device information.

Step S3: an antenna adjustment file adapted to the device information of the AISG device is created for each AISG device according to the scanning result of the AISG device.

In Step S3, the operation of creating, for each AISG device, the antenna adjustment file adapted to the device information of the AISG device includes that:
one device node is created for each AISG device on a storage tree according to the device information in each scanning result, and node information of each AISG device is generated;
antenna adjustment parameter information is configured for each AISG device to be adjusted according to the node information of each AISG device;
a corresponding relationship between each piece of configured antenna adjustment parameter information and each AISG device to be adjusted is established according to the node information of each AISG device; and
the antenna adjustment file is generated for each AISG device to be adjusted according to the antenna adjustment parameter information of each AISG device to be adjusted and the corresponding relationship.

In an exemplary embodiment, the node information of each AISG device at least includes an AISG version number, an AISG device type and RRU information.

In an exemplary embodiment, the step that the antenna adjustment parameter information is configured for each AISG device to be adjusted according to the node information of each AISG device includes that:
an AISG version number and an AISG device type in the node information of each AISG device are acquired;
the antenna adjustment parameter information of each AISG device to be adjusted is obtained according to a preset corresponding relationship between each of the AISG version number and AISG device type and antenna adjustment parameter information; and
a corresponding antenna calibration parameter, inclination angle setting parameter and inclination angle query parameter are configured for each AISG device to be adjusted according to the obtained antenna adjustment parameter information.

In an exemplary embodiment, the step that the corresponding relationship between each piece of configured antenna adjustment parameter information and each AISG device to be adjusted is established according to the node information of each AISG device includes that:
RRU information in the node information of each AISG device is acquired; and
a corresponding relationship between each piece of configured antenna adjustment parameter information and each AISG device to be adjusted is obtained according to the RRU information, to establish a corresponding channel for sending each piece of configured antenna adjustment parameter information.

Step S4: the antenna adjustment files created for respective AISG devices are sequentially issued to the corresponding AISG devices to enable the AISG devices to sequentially adjust antennae according to the antenna adjustment files.

In Step S4, the antenna adjustment parameter information in the antenna adjustment files created for respective AISG devices is sequentially sent to the corresponding AISG devices through the corresponding channels established for sending the antenna adjustment parameter information.

The antennae of the corresponding AISG devices sequentially execute the antenna adjustment parameter information in the antenna adjustment files.

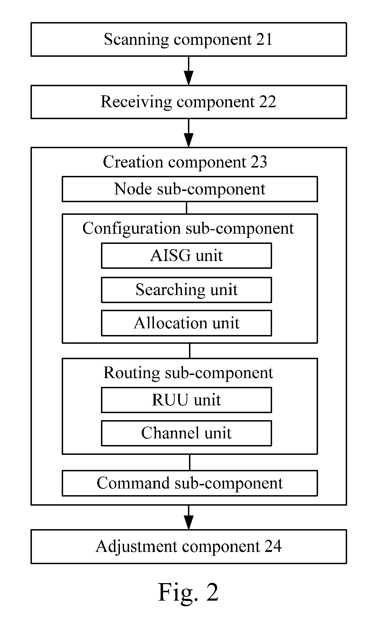

Fig. 2 is a structure diagram of a device for automatically performing commissioning test on AISG electrical tilt antennae in batches according to an embodiment of the present disclosure. As shown in Fig. 2, the device includes: a scanning component 21, a receiving component 22, a creation component 23 and an adjustment component 24.

The scanning component 21 may be implemented by an interface of a network management system, and is configured to send a scanning request to multiple AISG devices respectively connected with different RRUs.

The receiving component 22 may be implemented by a memory of the network management system, and is configured to receive, from the multiple AISG devices, scanning results obtained by the multiple AISG devices according to the scanning request, wherein each scanning result includes device information.

The creation component 23 may be implemented by a processor of the network management system, and is configured to create, for each AISG device, an antenna adjustment file adapted to the device information of the AISG device according to the scanning result of the AISG device. A node sub-component in the creation component 23 is configured to create one device node for each AISG device on a storage tree according to the device information in each scanning result, and generate node information of each AISG device. A configuration sub-component in the creation component 23 is configured to configure antenna adjustment parameter information for each AISG device to be adjusted according to the node information of each AISG device. A routing sub-component in the creation component 23 is configured to establish, according to the node information of each AISG device, a corresponding relationship between each piece of configured antenna adjustment parameter information and each AISG device to be adjusted. A command sub-component in the creation component 23 is configured to generate the antenna adjustment file for each AISG device to be adjusted according to the antenna adjustment parameter information of each AISG device to be adjusted and the corresponding relationship.

In an exemplary embodiment, the configuration sub-component further includes an AISG unit, a searching unit and an allocation unit. The AISG unit of the configuration sub-component is configured to acquire an AISG version number and an AISG device type in the node information of each AISG device. The searching unit of the configuration sub-component is configured to obtain the antenna adjustment parameter information of each AISG device to be adjusted according to a preset corresponding relationship between each of the AISG version number and AISG device type and antenna adjustment parameter information. The allocation unit of the configuration sub-component is configured to configure, according to the obtained antenna adjustment parameter information, a corresponding antenna calibration parameter, inclination angle setting parameter and inclination angle query parameter for each AISG device to be adjusted.

The routing sub-component further includes an RRU unit and a channel unit. The RRU unit of the routing sub-component is configured to acquire RRU information in the node information of each AISG device. The channel unit of the routing sub-channel is configured to obtain, according to the RRU information, a corresponding relationship between each piece of configured antenna adjustment parameter information and each AISG device to be adjusted, to establish a corresponding channel for sending each piece of configured antenna adjustment parameter information.

The adjustment component 24 may be implemented by combining the processor, memory and interface of the network management system, and is configured to sequentially issue the antenna adjustment files created for respective AISG devices to the corresponding AISG devices to enable the AISG devices to sequentially adjust antennae according to the antenna adjustment files.

An embodiment of the present disclosure provides a specific scenario required by an antenna manufacturer, the scenario being extensible and not limited to such a configuration relationship, so as to describe specific technical key points involved in one-key commissioning test according to the scenario. An RRU type, physical connection configuration relationship and AISG device type involved in the scenario may all be subsequently correspondingly extended (the embodiment of the present disclosure only involves a related antenna feeder type of Remote Electrical Tilt (RET) and does not involve, in this embodiment, a tower mounted amplifier related type).

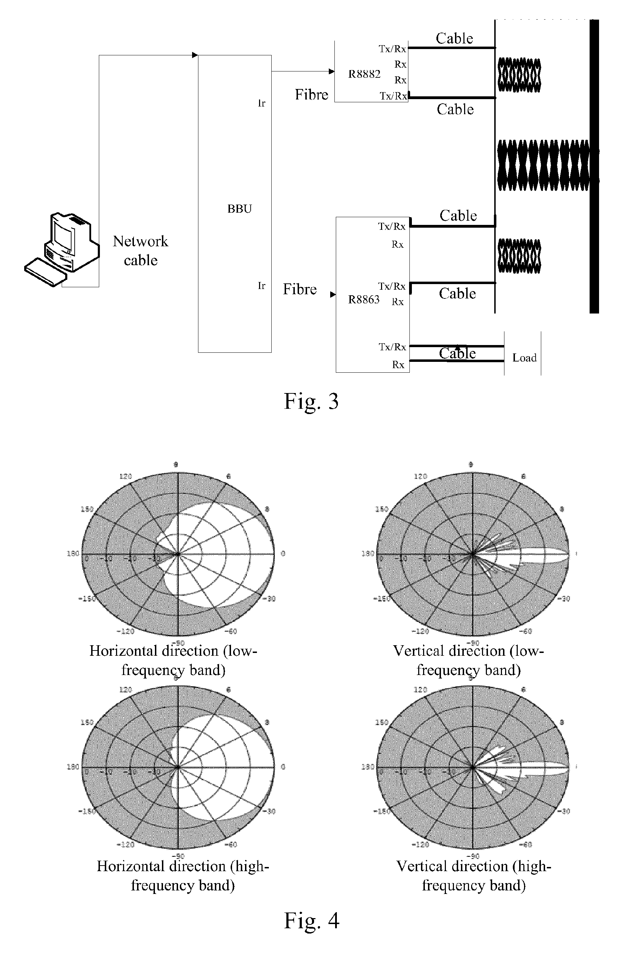

Fig. 3 is a diagram of a 2T2R typical connection configuration of R8882 and R8863 for automatically adjusting AISG electrical tilt antennae in batches according to an embodiment of the present disclosure. For different antenna manufacturers, antenna development personnel may perform commissioning test for indexes of a certain type of antenna devices in batches according to a configuration of a certain type of connections. For example, a common configuration scenario is provided, as shown in Fig. 3, there are totally two types of RRUs, R8882 is 900M R88820GUL9012 and R8863 is 2.1G R8863-S2100(A8A). R8882 and R8863 share an Andrew wideband antenna (a filter may be added after connection), but an AISG line is connected to R8882 only and no AISG lines are connected to R8863. R8882 and R8863 both adopt a 2T2R configuration manner, that is, if 6 RRUs are connected to a site, 3 R8882 are connected with AISG devices and 3 R8863 are not connected with AISG devices.

Fig. 4 is a diagram of basic indexes of various types of antennae to be tested during automatic batch commissioning test of AISG electrical tilt antennae according to an embodiment of the present disclosure. Antenna index parameters tested by manufacturers in batches are shown in Fig. 4.

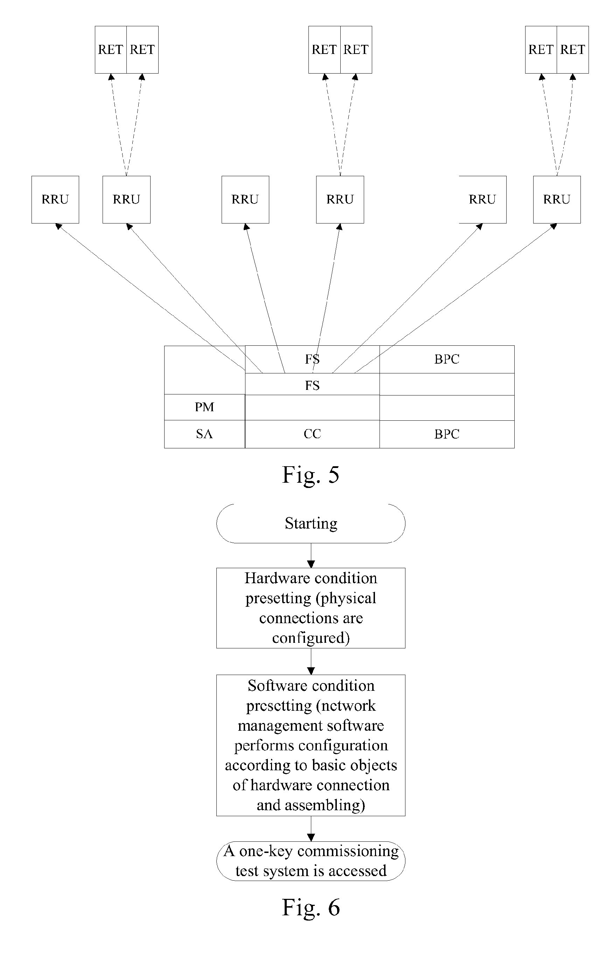

Fig. 5 is a topological diagram of a preset connection configuration manner for batch antenna commissioning test during automatic batch commissioning test of AISG electrical tilt antennae according to an embodiment of the present disclosure. As shown in Fig. 5, before batch commissioning test, it should be ensured that a practical physical connection configuration is substantially kept unchanged and it is only needed to replace different AISG antenna devices before each one-key commissioning test. In addition, in terms of software configuration, on the basis of an MOM objectification model, it should be ensured that 3 R9992-GUL9012 preconfigured through an LMT are connected with AISG antenna devices, such as RET units, as master control RRUs respectively, and that 2 R8863 S2100(A8A) should not be connected with AISG antenna devices. The 3 RRUs and an FS single board form 6 topological fibre connections respectively, 6 connections are configured to subsequently associate antenna physical entity objects AntEntity of the AISG antenna devices, and meanwhile, 6 radio frequency connections are configured to associate physical antennae and radio frequency ports of the RRUs.

Fig. 6 is a flowchart of a preset condition of a one-key tool for automatically performing commissioning test on AISG electrical tilt antennae in batches according to an embodiment of the present disclosure. As shown in Fig. 6, correct software and hardware presetting is a precondition for ensuring normal starting of a one-key commissioning test flow, and its basic flow is as follows: at first, hardware condition presetting is performed according to the topological diagram of the preset connection configuration manner for batch antenna commissioning test in Fig. 5 (that is, physical connections are configured); then, a software condition presetting is performed (that is, network management software performs configuration according to basic objects of hardware connection and assembling; and finally, a one-key commissioning test system is directly accessed.

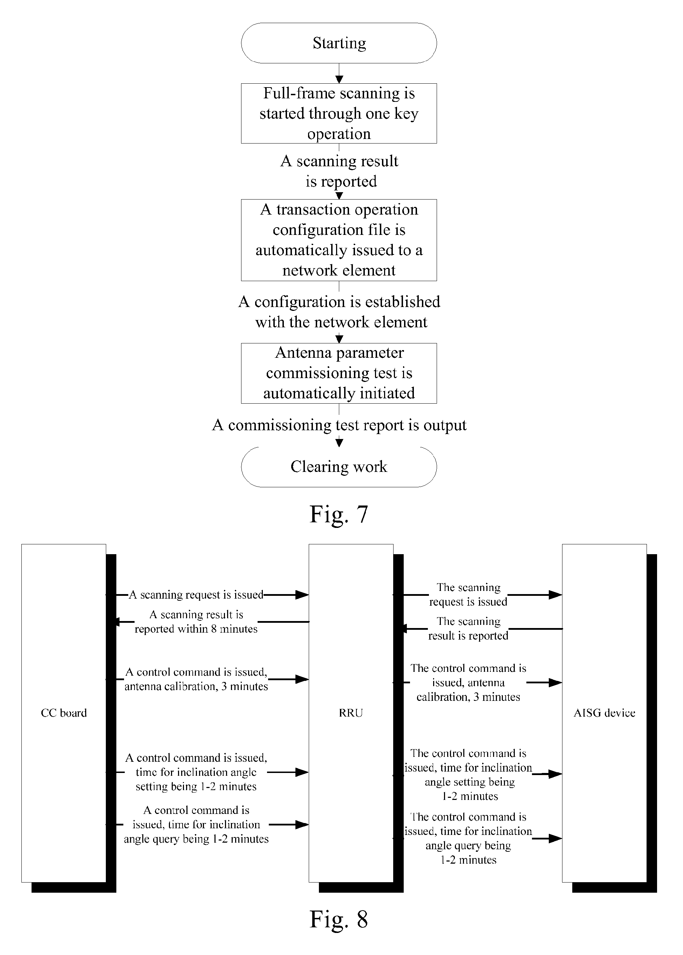

Fig. 7 is a flowchart of basic key steps of automatic commissioning test of antenna feeder parameters during automatic batch commissioning test of AISG electrical tilt antennae according to an embodiment of the present disclosure. As shown in Fig. 7, a one-key commissioning test flow is required to be implemented at a stretch, wherein the whole flow for a scenario specified by a manufacturer includes the flows of device scanning, device data issuing, device control command commissioning test and device deletion. In addition, scanning timeout duration, data issuing validation time, automatic device checking time and device control command setting and query time are reserved, fault tolerance time is also taken into consideration, for example, the flow is required to be continued without intervention of development personnel in case of scanning issuing failure or device validation failure.

The flow of the basic key points of automatic commissioning test of the antenna feeder parameters is specifically as follows. At first, a network management LMT starts full-frame scanning through one key operation; then, a transaction operation configuration file created by a scanning result reported for a scanning request of the network management LMT is automatically issued to a network element to establish a configuration between a network manager and the network element; next, the network management LMT automatically initiates antenna parameter commissioning test according to the transaction operation configuration file and outputs a commissioning test report; and finally, the network management LMT finishes clearing work.

Fig. 8 is a data flowchart of scanning and testing parameters of a single device with a basic configuration during automatic batch commissioning test of AISG electrical tilt antennae according to an embodiment of the present disclosure. As shown in Fig. 8, for a single device, time required to be reserved for a single flow and specific sequential steps are as follows: at first, a Clock Control (CC) board issues a scanning request to an AISG device through an RRU; then, the AISG device reports a scanning result generated according to the scanning request to the CC board through the RRU, wherein the scanning result may be reported to the CC board within 8 minutes if a timeout duration is within 10 minutes; and finally, the CC board issues a control command according to the scanning result, time allowed for antenna calibration being 3 minutes, time allowed for inclination angle setting being 1-2 minutes and time allowed for inclination angle query being 1-2 minutes.

In the exemplary embodiment, a key technical point to be solved for device scanning is as follows.

For scanning reporting of a single-subunit number in the scanning result, an AISG device object is required to be automatically created for a scanning record and then issued to foreground; and for a multi-subunit number, it is needed to create AISG device objects, the number of which is the same as that of the multiple subunits, and then issue the configuration, so as to achieve automatic adaptation over automatic incremental AISG issued data according to the scanning result aiming at different AISG protocol types and different antenna device types.

If the first scanning fails, time for second scanning may be prolonged because it is an issuing configuration of a dynamic table and the foreground cannot delete all configurations and then reset scanning time after the first scanning timeout, that is, if full-frame scanning is initiated, the next timeout duration is inevitably doubled after an issuing timeout. If 6 RRUs simultaneously perform scanning under the condition that foreground RRU links all work normally, there may not be timeout within 10 minutes, and in case of scanning timeout, it is needed to initiate single-frame scanning of an RRU without any antenna connection, the initiated scanning requires a user to manually fill a single frame number, the scanning will be timeout within 7 minutes, then the user continues initiating full-frame scanning, and in such a manner, the timeout duration will not be doubled. Such a key point mainly achieves timeliness of the one-key tool and maximally ensures automatic batch commissioning test efficiency.

According to such a configuration, one scanning requires 8 minutes, an inclination angle may be set after each antenna is automatically calibrated, time for automatic calibration and inclination angle setting of a network element of a base station is usually 3-5 minutes, and is 5 minutes here in this embodiment. Inclination angle adjustment is serial work, and antennae can only be adjusted one by one. Full-frame scanning is parallel work, and antenna devices connected with all master control RRUs can simultaneously perform scanning and wait for result reporting. After scanning results are reported, AISG object data required to be incrementally issued to the foreground is automatically created according to scanning records, and it is needed to consider conversion into database data through an MO to be identifiable for the base station after transaction is incrementally issued. In addition, in a Message-Oriented Middleware (MOM) object tree synchronized to the network manager, at least 2 seconds are required to revalidate the data. After AISG configurations are issued after scanning, the antennae can be operated for automatic calibration operation only after 1 minute. For an antenna commissioning test characteristic, these factors are all important indexes having influence on automatic batch commissioning test efficiency.

In fact, for management of the network management system over AISG device data, network manager network element data management of main base station network management software in the industry has been evolved from a database management manner based on tabular data into an MOM objectification data management manner based on an MOM objectification management manner of the 3rd Generation Partnership Project (3GPP).

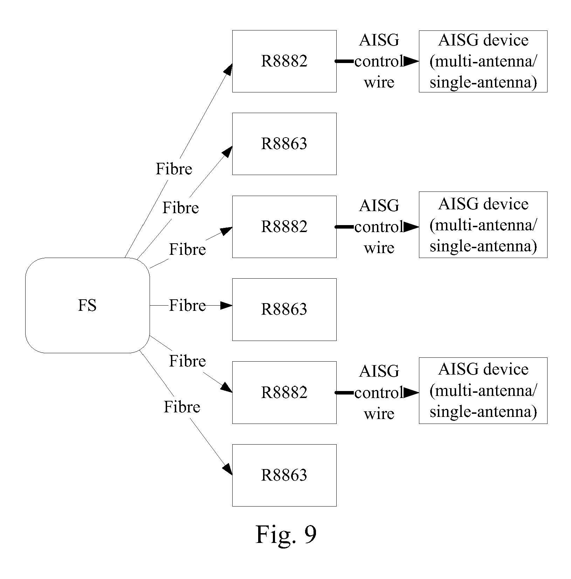

Fig. 9 is a diagram of a practical connection configuration manner of a manufacturer automatically performing commissioning test on AISG electrical tilt antennae in batches according to an embodiment of the present disclosure. As shown in Fig. 9, a practical scenario configuration mainly involves commissioning test of antenna devices, and in involved antenna interface standard protocols, a device type supported by AISG1.1 protocol is RETC (single-antenna) and device types supported by AISG2.0 are MULTI_RET (multi-antenna) and RETC (single-antenna). Many manufacturers may customize scanning and configuration of own AISG devices so as to derive, for example, an NSN private protocol or a private device type such as LGPTMA, which are all applicable to the present disclosure. In addition, the condition that different configurations are preset for antennae by antenna manufacturers, such as the condition that multiple FS single boards are extended to be connected with multiple RRUs for simultaneous scanning, may still be extended in the present disclosure. Other device types may also be extended in the present disclosure, so that the user is not required to focus on association between scanning objects and issued device objects, and the network management LMT automatically ensure configuration correctness.

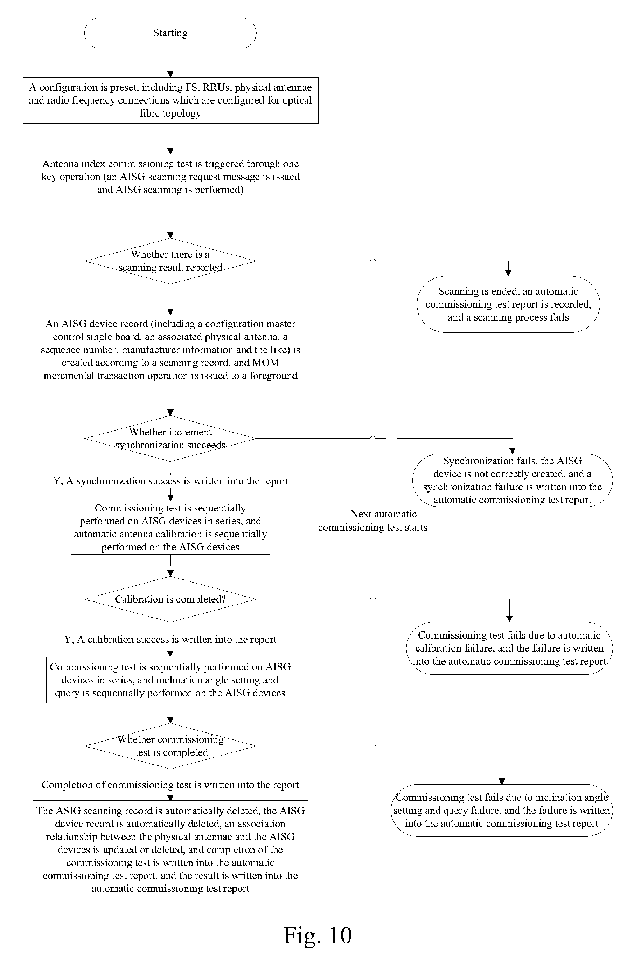

Fig. 10 is an automatic commissioning test flowchart of automatically performing commissioning test on AISG electrical tilt antennae in batches according to an embodiment of the present disclosure. As shown in Fig. 10, one-key automatic batch commissioning test is required to take a sequence of scanning, issuing, control and configuration deletion into consideration, and a specific triggering flow is as follows:
Step 1001: a configuration is preset, wherein the configuration includes Including FS, RRUs, physical antennae and radio frequency connections which are configured for optical fibre topology;
Step 1002: antenna index commissioning test is triggered through one key operation, an AISG scanning request message is issued, and AISG scanning is performed;
Step 1003: whether there is a scanning result reported or not is checked, and if a scanning result is reported, an AISG record (including a configuration master control single board, an associated physical antenna, a sequence number, manufacturer information and the like) is created according to a scanning record, MOM incremental transaction operation is issued to a foreground and Step 1004 is executed; if there is no scanning result reported, scanning is ended, an automatic commissioning test report is recorded and a scanning process fails;
Step 1004: whether increment synchronization succeeds or not is checked, an increment synchronization success is written into the report in case of successful increment synchronization, Commissioning test is sequentially performed on AISG devices in series, automatic antenna calibration is sequentially performed on the AISG devices, and Step 1005 is executed; in case of failed increment synchronization, the AISG device is not correctly created, and an increment synchronization failure is written into the automatic commissioning test report;
Step 1005: whether calibration is implemented or not is checked, calibration implementation is written into the report if calibration is implemented, the AISG devices are tested in series, inclination angle setting and query is sequentially performed on the AISG devices, and Step 1006 is executed; if calibration is not implemented, commissioning test fails, and an automatic calibration failure is written into the automatic commissioning test report;
Step 1006: whether commissioning test is completed or not is checked, completion of commissioning test is written into the report if the commissioning test is completed, the ASIG scanning record is automatically deleted, an association relationship between the physical antennae and the AISG devices is updated or deleted, and completion of the commissioning test is written into the automatic commissioning test report; if the commissioning test is not completed, commissioning test fails due to inclination angle setting and query failure, and the failure is written into the automatic commissioning test report; and
Step 1007: if next automatic commissioning test is started, Step 1002 is re-executed.

Development personnel of antenna manufacturers are not required to be concerned about many details in antenna encapsulation for adapting a network management object tree, and for triggering the whole flow from scanning to configuration to commissioning test through one key operation, the user is only required to replace different devices and then trigger commissioning test through one key operation. Implementation steps are as follows.

Step 1101: the user enters an LMT-based automatic commissioning test system through a system menu, opens an "AISG antenna feeder automatic monitoring" interface, routinely selects "full-frame scanning" and triggers automatic commissioning test through an "antenna feeder parameter index commissioning test" key, specifically including that:
(1) a connection configuration is preset, full-frame scanning is selected, and sending of an AISG scanning request to a network element is triggered for scanning all RRU frames through one key operation;
(2) routine operation is performed, there is a scanning result may be reported through a TRAP structure within 8 minutes if a timeout duration is within 10 minutes under the condition of no link breaking of the RRUs, and no matter whether the scanning result indicates a success or a failure, a scanning field content is recorded into the commissioning test report; and
(3) non-routine operation is performed, there may not be any scanning result reported within the timeout duration of 10 minutes under the condition of wrong connection or link breaking alarm, and scanning fails; the timeout duration may be accumulated to 20 minutes when scanning is restarted, and the timeout duration may be subsequently continuously accumulated; at this moment, it is needed to start single-frame scanning to ensure that the timeout duration in each scanning may not be accumulated and is 10 minutes, and a result is recorded into the commissioning test report.

Step 1102: the scanning result may be reported through a Simple Network Management Protocol (SNMP)-based TRAP reporting mechanism, and the reported result is automatically encapsulated into an AISG data object structure identifiable for the MOM object tree by the system, and is issued into a base station system in a manner of transaction increment issuing operation, specifically including that:
(1) the scanning records are traversed, and for an RETC-type device object, it is needed to create and insert an AISG device MOM object with a subunit number of 255 into a transaction increment file for issuing on the basis of AISG1.1 protocol;
(2) for the RETC-type device object, it is needed to create and insert the AISG device MOM object with the subunit number of 255 into the transaction increment file for issuing on the basis of AISG2.0 protocol;
(3) for a MULTI_RET-type device object, it is needed to create and insert an AISG device MOM object with records in a number equal to that of multiple subunits into the transaction increment file for issuing on the basis of AISG2.0 protocol; and
(4) for each created AISGN device MOM object, it is needed to update physical entity antenna objects, modify a citation relationship between them and the AISG device objects and insert the update and modification into the transaction increment file for issuing.

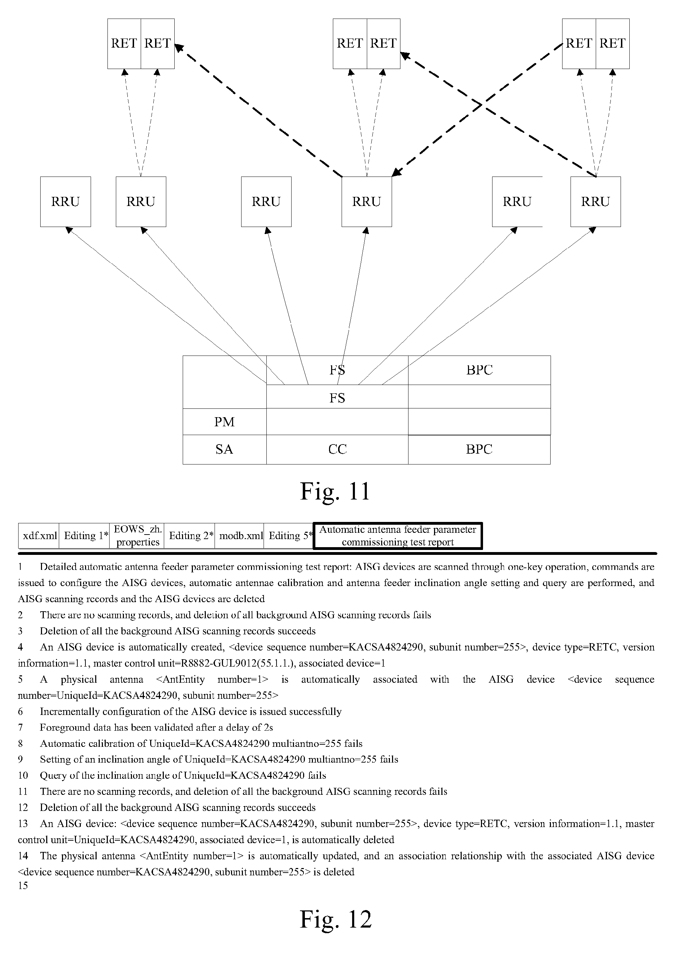

In an exemplary embodiment, Fig. 11 is a topological diagram after automatically encapsulated AISG device objects are issued during automatic batch commissioning test of AISG electrical tilt antennae according to an embodiment of the present disclosure. As shown in Fig. 11, a transaction operation increment file is issued, 2 seconds are required for synchronization to a network manager side after synchronization to a base station side, and data is validated on the network manager side after re-access.

Step 1103: the transaction increment is validated on a network element side after being issued, and automatic commissioning test of basic parameters of the antenna devices is automatically triggered, including automatic calibration, inclination angle setting and query and the like.

Fig. 12 is a diagram of recording operation flow details and results into an automatic commissioning test report during automatic batch commissioning test of AISG electrical tilt antennae according to an embodiment of the present disclosure. Recorded report content after one-time operation is shown in Fig. 12. The diagram specifically includes:
(1) all the validated AISG antenna device objects are traversed, and serial operation is performed;
(2) for each AISG antenna device object, an automatic calibration control command is issued, a timeout duration is 3 minutes and an operating result is recorded into the automatic commissioning test report;
(3) for each AISG antenna device object, an inclination angle setting control command is issued, a timeout duration is 2 minutes and an operating result is recorded into the automatic commissioning test report; and
(4) for each AISG antenna device object, an inclination angle query control command is issued, a timeout duration is 2 minutes and an operating result is recorded into the automatic commissioning test report.

Step 1104: after the commissioning test is completed, the AISG scanning data on the network manager side may be automatically deleted and synchronized to the network element, the AISG device data on the network element side is deleted, and the results are recorded into the automatic commissioning test report, specifically including that:
(1) the scanning records are traversed, all scanning record nodes are deleted and the results are recorded into the automatic commissioning test report;
(2) all the AISG device objects in the MOM object tree are traversed, and all the nodes are deleted and inserted into transaction increment file for issuing;
(3) for each created AISG device object, it is needed to update the physical entity antenna objects, delete the citation relationship between them and the AISG device objects and insert the update and modification into the transaction increment file for issuing; and
(4) the transaction operation increment file is issued, 2 seconds are required for synchronization to the network manager side after synchronization to the base station side, the data is validated on the network manager side after re-access, and the result is recorded into the automatic commissioning test report.

For one-key triggering of the whole flow from scanning to configuration to commissioning test, exemplary implementation steps are as follows.

Step 1201: the user enters an automatic AISG antenna feeder batch commissioning test system through a system menu, opens an "AISG antenna feeder automatic monitoring" interface, routinely selects "full-frame scanning" and triggers automatic commissioning test through an "antenna feeder parameter index commissioning test" key, specifically including that:
(1) after a scanning message is issued, AISG scanning results are waited to be reported, a field content required to be concerned about in the scanning record including an AISG version number, an AISG device type, a multi-subunit number, an device sequence number, master control RRU information, a manufacturer number and the like;
(2) if there is a scanning result reported within the timeout duration, a TRAP result may be stored into an MOM tree node AISG scan unit of a background, and a scanning success result may be recorded into the automatic commissioning test report; and
(3) in case of scanning failure, the result may be recorded into the automatic commissioning test report, the flow may not be continued because there is no scanning result reported, the commissioning test report may be checked, a frame number with a full-frame scanning timeout may be displayed, and at this moment, single-frame scanning is required to be selected to trigger one-key commissioning test, and single-frame scanning may clear database data residues on the network manager side to ensure that every scanning timeout duration may not be accumulated.

Step 1202: AISG device node information to be issued to the network element is automatically created and incrementally issued according to scan unit information reported by scanning, specifically including that:
(1) for the RETC device type, an AISG device node with a subunit number of 255 is automatically created on the basis of AISG1.1 protocol, necessary field information is filled, and the AISG device node is marked as a node addition mark "I" in the increment file;
(2) for the RETC device type, the AISG device node with the subunit number of 255 is automatically created on the basis of AISG2.0 protocol, the necessary field information is filled, and the AISG device node is marked as the node addition mark "I" in the increment file;
(3) for the MULTI_RET device type, AISG device nodes in a number equal to a multi-subunit number are automatically created on the basis of AISG2.0 protocol, necessary field information is filled, and each AISG device node is marked as the node addition mark "I" in the increment file;
(4) for each created AISG device object, it is needed to update the physical entity antenna objects, modify the citation relationship Reserved By AISG device between them and the AISG equipment objects, mark the update and modification as "U" and insert it into the transaction increment file for transmission; and'
(5) the transaction operation increment file is issued, a transaction increment operation serial number is filled, and the data is synchronized to the network element side instead, and then is reversely created on the network manager side.

Step 1203: all the validated AISG device objects are traversed, control commands including automatic calibration, inclination angle setting and inclination angle query are issued in series, and results are recorded into the automatic commissioning test report.

Step 1204: after the commissioning test is completed according to the commissioning test commands, the AISG scanning data on the network manager side may be automatically deleted and synchronized to the network element, the AISG device data on the network element side is deleted, and the results are recorded into the automatic commissioning test report, specifically including that:
(1) all the AISG scan units are deleted, and a background database is updated; and
(2) for different AISG protocol types, different device types and different multi-subunit types, all the AISG device nodes are marked to be deletion "D", all the physical entity antenna objects AntEntity are updated at the same time, the citation relationship Reserved By AISG device between them and the AISG device objects is deleted, the increment operation transaction number is filled, transaction operation is issued to the network element side, and the result is recorded into the automatic commissioning test report.

The physical connection relationship is preset according to the connection configuration relationship of the antenna manufacturer, and the method for automatically performing commissioning test on AISG antennae in batches from scanning to configuration to antenna index commissioning test is triggered through one key operation, so that the connection configuration of the software and the hardware is not required to be switched, and software automatically finishes sending the control commands of AISG antenna device scanning, issuing and commissioning test through one-key operation. The operating results in the whole flow are recorded into the automatic commissioning test report in a unified manner for antenna development personnel to independently query, so that antenna and network manager development is completely decoupled. In an exemplary embodiment, problems of each link may be discovered through the commissioning test results in the automatic commissioning test report, so that an AISG commissioning test function may be improved and decoupled from a network management service, which may improve antenna commissioning test efficiency from the source.

Therefore, the antenna development personnel are freed from the configuration service flow of the network manager, the internal service is automatically implemented completely by software, the manufacturer is only required to focus on own indexes of the antenna devices, the operating threshold of the network management software is greatly lowered, and commissioning test time is saved. Meanwhile, the manufacturer and the operation and maintenance personnel also may not be required to focus on the configuration flow of the network manager, and the indexes of the AISG antennae of each manufacturer are automatically tested in batches.

In addition, during a practical application, the network management LMT is based on automatic batch commissioning test, the development personnel of the antenna manufacturer are not required to focus on the network management service, and are only required to provide the software of the present disclosure for the antenna manufacturer during index commissioning test, and for the involved software interface and security protocol, the main GUI interface of the network management LMT is simultaneously separated on the basis of the LMT network management software, the one-key operating interface and the automatic commissioning test report are provided, and separation on the LMT interface is only dependent on the objectification MOM tree of the LMT network manager.

In an exemplary embodiment, on the basis of the MOM management object tree structure of the LMT, the complex service of creating the practical AISG device nodes adapted to the network element according to the scanning nodes of the network manager is separated, and the condition that correctness of the AISG device nodes and correctness of the association relationship with the physical antennae are ensured by the network management development personnel is avoided. Scanning and timeout processing are not required to be manually operated, the control commands are not required to be manually sent, the antenna systems are required to be manually tested in series, each flow is connected completely in a one-key operating manner, so that the network management service is highly decoupled from the antenna index service, commissioning test difficulties for the antenna development, operation and maintenance personnel are greatly lowered, and details of the network manager GUI are also prevented from be exposed to the antenna manufacturer.

From the above, the present disclosure has technical effects as follows: by the method for performing commissioning test on the AISG antenna feeder indexes on the basis of the AISG device management decoupled network manager GUI and antenna feeder service of the network management system, e.g., LMT, through one key operation, the following technical effects may be achieved:
(1) scanning reporting of an external electrical tilt antenna device of the base station system is high in fault tolerance, the timeout duration under a routine configuration and the timeout duration under a link breaking condition may not be accumulated, and if there is no correct report within the timeout duration, single-frame scanning may be started and the database of the network element may be refreshed to avoid accumulation of the timeout duration of one-key scanning operation and improve the efficiency of the scanning flow;
(2) the adapted AISG antenna feeder device MOM objects are automatically created according to the scanning results, are issued to the base station system for data conversion and stored in the database, so that the network management service is avoided, adaptive encapsulation of the data is automatically implemented completely by the system, the network management service may be highly decoupled from antenna commissioning test, and the using requirements on the operating personnel are lowered; and
(3) parameter commissioning test is customized, antenna feeder parameter commissioning test and index fine adjustment are performed in series without manual intervention after validation of the devices, and parameter commissioning test of all the devices is automatically controlled completely in the system without concerns of the operating personnel, so that operating efficiency is improved.

According to the above technical effects, the operation and maintenance personnel may obtain the operating results of each service link through the automatic commissioning test report to further modify the practical physical connection configuration and check a practical environmental alarm without concerning about the software association of the objects on the network management software side. Therefore, service operation and maintenance is greatly facilitated, device environments of different antenna manufacturers may be flexibly adapted, the manufacturers and operation and maintenance may be separated from the configuration service of the network manager, the GUI intervention of the network management in connection configuration is weakened, the antenna feeder manufacturers, users and operation and maintenance are decoupled from the configuration GUI of the network manager, and the function of the manufacturers, operation and maintenance and the users in performing the commissioning test on the AISG antenna feeder device parameters is enhanced.

Detailed descriptions about the present disclosure are made above and not intended to limit the present disclosure, and those skilled in the art may make various modifications according to the principle of the present disclosure. Therefore, all modifications made according to the principle of the present disclosure shall fall within the scope of protection of the present disclosure.

## Claims

1. A method for automatically performing commissioning test on Antenna Interface Standards Group, AISG, electrical tilt antennae in batches, comprising:
sending a scanning request to multiple AISG devices respectively connected with different Remote Radio Units, RRUs;
receiving, from the multiple AISG devices, scanning results obtained by the multiple AISG devices according to the scanning request, wherein each scanning result comprises device information;
creating, for each AISG device, an antenna adjustment file adapted to the device information of the AISG device according to the scanning result of the AISG device; and
sequentially issuing the antenna adjustment files created for respective AISG devices to the corresponding AISG devices to enable the AISG devices to sequentially adjust antennae according to the antenna adjustment files.

2. The method as claimed in claim 1, wherein creating, for each AISG device, the antenna adjustment file adapted to the device information of the AISG device comprises:
creating one device node for each AISG device on a storage tree according to the device information in each scanning result, and generating node information of each AISG device;
configuring, according to the node information of each AISG device, antenna adjustment parameter information for each AISG device to be adjusted;
establishing, according to the node information of each AISG device, a corresponding relationship between each piece of configured antenna adjustment parameter information and each AISG device to be adjusted; and
generating, according to the antenna adjustment parameter information of each AISG device to be adjusted and the corresponding relationship, the antenna adjustment file for each AISG device to be adjusted.

3. The method as claimed in claim 2, wherein the node information of each AISG device at least comprises an AISG version number, an AISG device type and RRU information.

4. The method as claimed in claim 2 or 3, wherein configuring, according to the node information of each AISG device, the antenna adjustment parameter information for each AISG device to be adjusted comprises:
acquiring an AISG version number and an AISG device type in the node information of each AISG device;
obtaining, according to a preset corresponding relationship between each of the AISG version number and AISG device type and antenna adjustment parameter information, the antenna adjustment parameter information of each AISG device to be adjusted; and
configuring, according to the obtained antenna adjustment parameter information, a corresponding antenna calibration parameter, inclination angle setting parameter and inclination angle query parameter for each AISG device to be adjusted.

5. The method as claimed in claim 2 or 3, wherein establishing, according to the node information of each AISG device, the corresponding relationship between each piece of configured antenna adjustment parameter information and each AISG device to be adjusted comprises:
acquiring RRU information in the node information of each AISG device; and
obtaining, according to the RRU information, a corresponding relationship between each piece of configured antenna adjustment parameter information and each AISG device to be adjusted, to establish a corresponding channel for sending each piece of configured antenna adjustment parameter information.

6. The method as claimed in claim 2, wherein sequentially issuing the antenna adjustment files created for respective AISG devices to the corresponding AISG devices to enable the AISG devices to sequentially adjust antennae according to the antenna adjustment files comprises:
sequentially sending the antenna adjustment parameter information in the antenna adjustment files created for respective AISG devices to the corresponding AISG devices through corresponding channels established for sending the antenna adjustment parameter information; and
sequentially executing, by antennae of the corresponding AISG devices, the antenna adjustment parameter information in the antenna adjustment files.

7. A device for automatically performing commissioning test on Antenna Interface Standards Group, AISG, electrical tilt antennae in batches, comprising:
a scanning component, configured to send a scanning request to multiple AISG devices respectively connected with different Remote Radio Units, RRUs;
a receiving component, configured to receive, from the multiple AISG devices, scanning results obtained by the multiple AISG devices according to the scanning request, wherein each scanning result comprises device information;
a creation component, configured to create, for each AISG device, an antenna adjustment file adapted to the device information of the AISG device according to the scanning result of the AISG device; and
an adjustment component, configured to sequentially issue the antenna adjustment files created for respective AISG devices to the corresponding AISG devices to enable the AISG devices to sequentially adjust antennae according to the antenna adjustment files.

8. The device as claimed in claim 7, wherein the creation component further comprises:
a node sub-component, configured to create one device node for each AISG device on a storage tree according to the device information in each scanning result, and generate node information of each AISG device;
a configuration sub-component, configured to configure, according to the node information of each AISG device, antenna adjustment parameter information for each AISG device to be adjusted;
a routing sub-component, configured to establish, according to the node information of each AISG device, a corresponding relationship between each piece of configured antenna adjustment parameter information and each AISG device to be adjusted; and
a command sub-component, configured to generate, according to the antenna adjustment parameter information of each AISG device to be adjusted and the corresponding relationship, the antenna adjustment file for each AISG device to be adjusted.

9. The device as claimed in claim 8, wherein the configuration sub-component further comprises:
an AISG unit, configured to acquire an AISG version number and an AISG device type in the node information of each AISG device;
a searching unit, configured to obtain, according to a preset corresponding relationship between each of the AISG version number and AISG device type and antenna adjustment parameter information, the antenna adjustment parameter information of each AISG device to be adjusted; and
an allocation unit, configured to configure, according to the obtained antenna adjustment parameter information, a corresponding antenna calibration parameter, inclination angle setting parameter and inclination angle query parameter for each AISG device to be adjusted.

10. The device as claimed in claim 8, wherein the routing sub-component further comprises:
an RRU unit, configured to acquire RRU information in the node information of each AISG device; and
a channel unit, configured to obtain, according to the RRU information, a corresponding relationship between each piece of configured antenna adjustment parameter information and each AISG device to be adjusted, to establish a corresponding channel for sending each piece of configured antenna adjustment parameter information.
